# EUROPEAN PATENT SPECIFICATION

(11) **EP 4 540 069 B1**
(45) Date of publication and mention of the grant of the patent: **06.05.2026**
(21) Application number: 23738869.9
(22) Date of filing: 14.06.2023
(51) Int. Cl.: B60B 1/04, B60B 1/00, B60B 27/02, B60B 27/00

(54) **A HUB FOR WHEELS OF BICYCLES WITH DISC BRAKES, AND WHEEL THEREWITH**
NABE FÜR FAHRRADRÄDER MIT SCHEIBENBREMSEN UND RAD DAMIT
MOYEU POUR ROUES DE BICYCLETTES À FREINS À DISQUE, ET ROUE ASSOCIÉE

(30) Priority: 15.06.2022 DE 202022103386 U
(43) Date of publication of application: 23.04.2025
(73) Proprietor: ZEG Zweirad-Einkaufs-Genossenschaft eG, 50739 Köln (DE)
(72) Inventor: GEHRING, Hendrik, 51429 Bergisch Gladbach (DE)
(74) Representative: Patentanwälte Buschhoff Hennicke Althaus
(86) International application number: PCT/IB2023/056120
(87) International publication number: WO 2023/242747

(56) References cited:
- WO-A1-2018/032047
- FR-B1- 2 794 063
- US-A1- 2005 034 932
- US-A1- 2013 049 322
- US-B2- 7 066 556

## Description

The invention relates to a hub for wheels of bicycles with disc brakes, having a hub shell with a first spoke flange, with a second spoke flange and with a through hole for a wheel bearing axle in the hub shell, wherein the first spoke flange and the second spoke flange are respectively provided with a plurality of spoke flanges arranged on a pitch circle around a wheel axle and wherein the second spoke flange is provided with a fastening device comprising screw holes for a brake disc. The invention also relates to a wheel with a corresponding hub for bicycles with disc brakes.

For many years, bicycles have not only been equipped with classic rim brakes, but also with disc brakes. Different solutions exist for fastening the brake disc to the wheel of a bicycle. A standardized solution relates to the fastening of the brake disc to the hub by means of a centre lock system on the hub, for which the hub is provided with a multi-tooth profile outside of one of the two spoke flanges, onto which a fastening collar with a matching multi-tooth profile is pushed, which is then secured by means of a locking ring (see US 6371252B1). As a rule, the locking collar has 5 arms with a corresponding number of screw holes, to which a correspondingly suitably formed brake disc can be fastened. Another standard provides a 6-hole fastening of the brake disc. The screw holes are located on a bolt circle with a standardized inner diameter of 44 mm. The screw holes can be formed directly on the hub, or the screw holes can also be part of an adaptor, as is described for example in DE 200 23 358 U1.

The brake forces to be absorbed and mastered increase with increasing speed for bicycles and the weight of the vehicles; in the case of electric bicycles, the basic weight already increases considerably due to the additional components such as the motor or battery. Added to this is the weight of the vehicle driver, and by means of suspension systems etc. increasingly difficult gradients and route conditions can be mastered with a bicycle as for example a mountain bike. In order to improve the brake effect, the trend is towards larger brake discs, which have the additional advantage of better heat dissipation. However, this can lead to reduced lateral rigidity of the brake disc, which is why brake manufacturers sometimes fall back on to stronger material strengths for the brake discs or use multi-part brake discs. Both approaches increase the cost and/or also lead to even higher weights.

A hub for wheels of bicycles with disc brakes is known for example from document WO 2018/032047 A1.

It is the object of the invention to provide a hub for wheels of bicycles with disc brakes, in which brake discs with large diameters can also be fastened while avoiding the aforementioned problems.

To solve this object, the invention proposes that the second spoke flange has a larger diameter than the first spoke flange and that the spoke retaining holes on the second spoke flange are arranged on an outer pitch circle with a larger radius around the wheel axis than the spoke retaining holes on the first spoke flange, and that the screw holes on the second spoke flange are arranged radially offset outwardly relative to the spoke retaining holes on the second spoke flange on a bolt circle whose diameter is preferably at least 75 mm.

Due to the larger bolt circle and the enlarged spoke flange, the brake forces can be better dissipated and, above all, less leverage results between the brake calliper and the spoke flange of the hub, whereby a more direct brake feel is reduced at lower loads.

The bolt circle preferably has a diameter which is larger than 90 mm, more preferably larger than 110 mm and particularly preferably 120 mm. A dimension of 120 mm still allows the addition of an ABS sensor ring.

In the particularly preferred design, the second spoke flange has twice as many spoke retaining holes than screw holes, and a design in which the second spoke flange has eight screw holes and then correspondingly 16 spoke retaining holes, is particularly preferred. In order to facilitate lacing of the wheel at the same time, it is particularly advantageous that according to the invention the second spoke flange of the hub has a base projection for each screw hole, wherein the screw holes are preferably respectively arranged in face sections of the base projections and are axially and radially offset from the spoke retaining holes. With this design, a variant is particularly advantageous in which each base projection has a base with an axially extending recess and is respectively positioned in the region of one of the recesses of one of the spoke retaining holes. In order reduce weight, it is particularly advantageous if the second spoke flange is provided with pocket depressions or breakthroughs in a flange face between the through hole and the spoke retaining holes, wherein the pocket depressions or breakthroughs are preferably arranged rotationally symmetric to the wheel axle, whereby imbalances are avoided at the same time. Alternatively or additionally, a recess and a breakthrough can respectively be arranged symmetrically to a radial line, wherein further preferably a screw hole and a spoke retaining hole are arranged symmetrically to this radial line, and are preferably arranged on the radial line with their hole centre.

In order to create a particularly rigid design of the hub, it is particularly advantageous if the base projection is an integral part of the second spoke flange, wherein the second spoke flange and/or the hub shell preferably consist of a cast part or a forged part. The above object of a wheel for bicycles with a disc brake, that has a hub having a hub shell with a first spoke flange, with a second spoke flange and with a through hole in the hub shell for a wheel bearing axle, which is connected to a rim ring which is non-rotatably connected to the hub by means of spokes, and which is provided or can be provided with a brake disc, wherein the first spoke flange and the second spoke flange are respectively provided with a plurality of spoke retaining holes arranged on a pitch circle around a wheel axle, to which holes the spokes are anchored with spoke heads, and wherein the second spoke flange is provided with a fastening device for a brake disc comprising screw holes is solved in that the second spoke flange has a larger diameter than the first spoke flange and the spoke retaining holes on the second spoke flange are arranged on an outer pitch circle with a larger radius around the wheel axle than the spoke retaining holes arranged on an inner pitch circle on the first spoke flange, and that the screw holes on the second spoke flange are arranged radially offset outwardly relative to the spoke retaining holes on a bolt circle whose diameter is at least 75 mm. Here, too, additional advantages result if the hub is formed as described above.

It is particularly expedient if the brake disc has eight fastening points for threaded screws to pass through, wherein the fastening points are arranged on a bolt circle with a diameter which, matching to the bolt circle of the screw holes is larger than 75 mm, in particular larger than 90 mm, more preferably larger than 110 mm, and in particular preferably 120 mm, and respectively one fastening point is fastened to one of the screw holes on the second spoke flange by means of a threaded screw. According to an embodiment variant, a sensor ring can be assigned to the brake disc as an additional separate element, wherein the sensor ring has retaining webs with retaining holes that protrude radially inwards and each retaining hole of the sensor ring is fastened to a fastening point by means of one of the threaded screws for the brake disc.

Further advantages and designs of a hub according to the invention or of a wheel with such a hub result from the following description of an exemplary embodiment illustrated in the drawing as an example. In the drawing are shown:
- **Fig.1**: in a perspective view a wheel according to the invention with a hub according to the invention together with a brake disc and indicated brake callipers;
- **Fig.2**: in a perspective detailed view a hub for a wheel with mounted brake disc according to the invention;
- **Fig.3**: a plan view of the hub with the brake disc of figure 2; and
- **Fig.4**: a side view of the hub with the brake disc of figure 2.

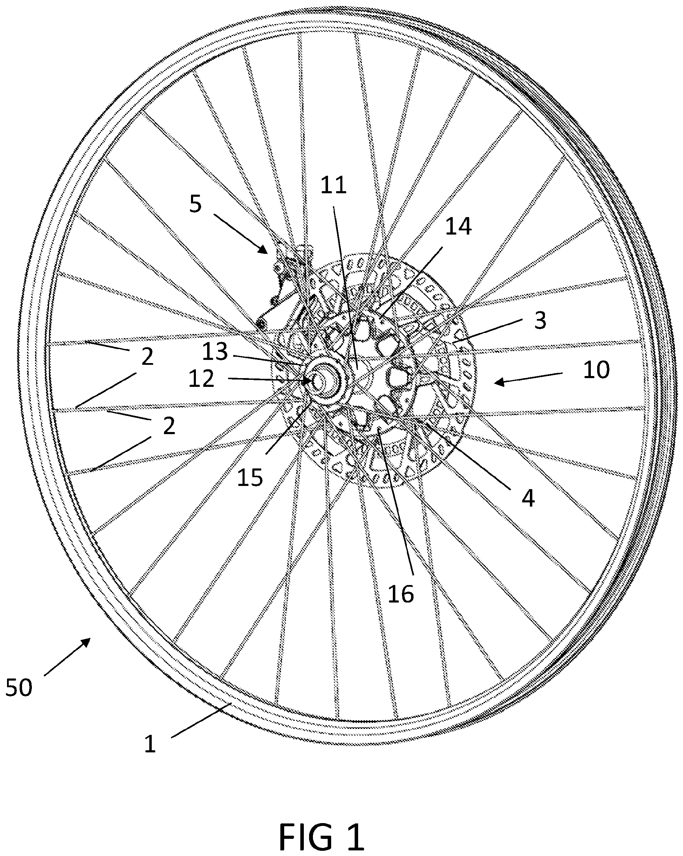

In figure 1, a wheel for a bicycle, not shown, with disc brakes according to the invention is altogether designated with reference numeral 20. In a manner known per se to the person skilled in the art, the wheel consists of a rim ring 1 for supporting and receiving a bicycle casing, not shown, wherein the rim ring 1 is connected to a centrally arranged hub, altogether designated with reference numeral 10, here via thirty-two spokes 2. The hub 10 consists essentially of a central hub shell 11 with a through hole 12 for the rotatable support of a wheel bearing axle as for example a quickrelease axle or a stub axle via wheel bearings arranged in the interior of the through hole 12. The hub shell 11 in turn has a first spoke flange 13, which is at the front in figure 1, and a second spoke flange 14, which is at the rear in figure 1, and the individual spokes 2 extend between the inner side of the rim ring 1 and respectively one of the two spoke flanges 13, 14. Viewed in the circumferential direction, the individual spokes 2 are fastened alternately to spoke retaining holes 15 in the first spoke flange or to spoke retaining holes 16 in the second spoke flange 14, wherein sixteen spokes 2 are respectively assigned to the first spoke flange 13 and sixteen further spokes to the second spoke flange 14. With respect to each of the two spoke flanges 13, 14, adjacent spokes 2 run again alternately either on the axially inner side of a spoke flange or on the axially outer side of a spoke flange, as is fundamentally known to the person skilled in the art. A brake disc 3 is fastened to the rear, second spoke flange 14, which brake disc is additionally provided with an ABS sensor ring 4 in the exemplary embodiment shown according to figure 1. The brake disc 3 in turn is assigned to a brake calliper 5 which is mounted in a stationary manner on the bicycle frame side and which can be operated in a suitable manner and, if necessary, can also be coupled to an ABS system.

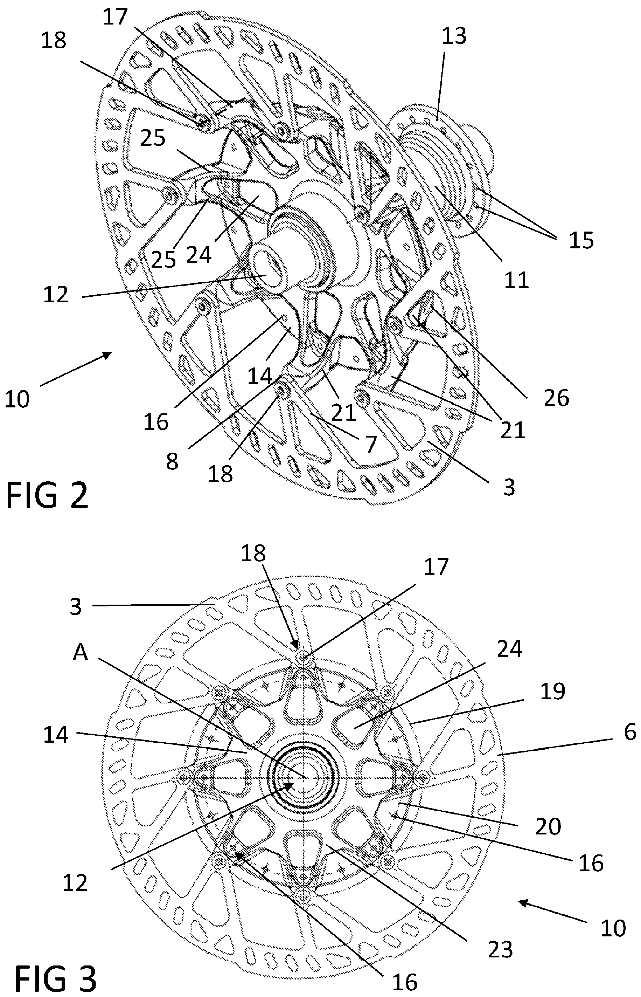

Reference is now also made to figures 2 to 4, in which only the hub 10 is illustrated without spokes and rim ring but with the mounted brake disc 3, wherein an ABS sensor ring, as in figure 1, is not additionally assigned to the brake disc 3. The hub shell 11 with the first spoke flange 13 and the second spoke flange 14 can clearly be seen better in these figures, including the sixteen spoke retaining holes 15 on the first spoke flange 13 and the sixteen spoke retaining holes 16 on the second spoke flange 15. The second spoke flange 14 has a clearly larger diameter than the first spoke flange 13, and the individual spoke retaining holes 14 on the first spoke flange also lie on an inner pitch circle whose diameter or whose radius and the wheel axle A are clearly smaller than the diameter (or radius) of the outer pitch circle, on which pitch circle the individual spoke retaining holes 16 are arranged on the second spoke flange 14. While the first spoke flange 13 is formed as in other standardized designs of a hub, the second spoke flange 14 is indeed also an integral part of the hub shell 11 consisting preferably of a forged part, but the second spoke flange 14 is integrally provided with a plurality of eight screw holes 17 shown in the exemplary embodiment, into each of which a threaded screw 18 is screwed, fixing the brake disc 3 on the second spoke flange 14. Each screw hole 17 lies on a bolt circle marked with reference numeral 19 in figure 3, the inner diameter of which is larger than the diameter of the outer pitch circle 20, on which the individual spoke retaining holes 16 are arranged on the second spoke flange 14.

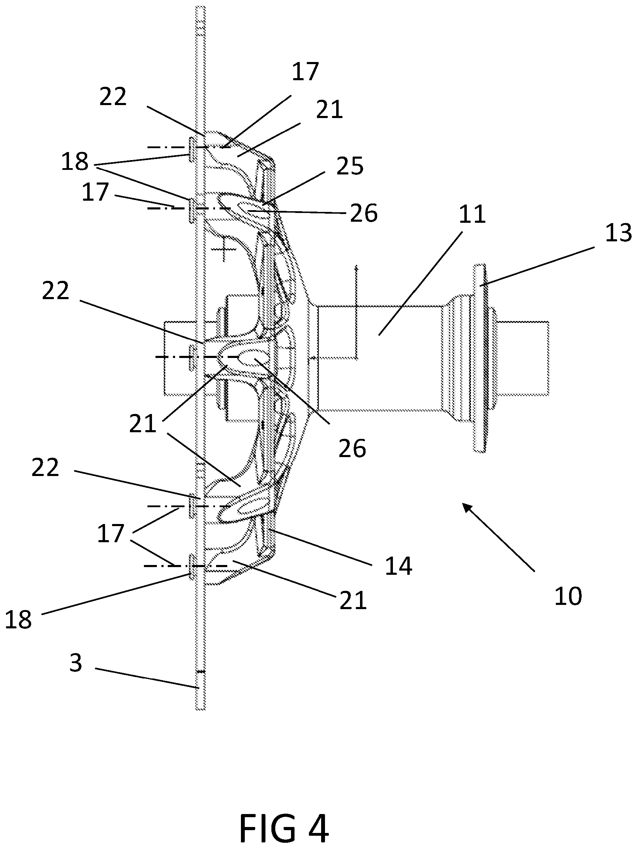

Fig. 2 and 4 show particularly well that the respective screw holes 17 are formed on the end faces 22 of base projections 21, which are also an integral part of the second spoke flange 14, whereby the screw holes 17 together with the end faces 22, on which the brake disc 3 lies flat and flush in the assembled state, span a plane which is offset axially outwards from a plane in which the respective spoke retaining holes 16 are formed. Due to the difference in diameter between the outer pitch circle 20 for the spoke retaining holes 16 and the bolt circle 19 for the screw holes 17, a radial offset results at the same time. Between the inner hole 12 and the outer pitch circle 20, on which the spoke retaining holes 16 are arranged, the second spoke flange 14 forms a flange face 23 which, in the exemplary embodiment shown, is provided with eight comparatively large breakthroughs 24, wherein the width of the individual breakthroughs 24 decrease from radially inwards to radially outwards. In the radially outer region of the respective breakthroughs 24, a rib 25 or double rib is formed around each breakthrough 24, which rib forms the basic base for the base projections 21, as can be seen particularly well in fig. 2. In turn, one of the spoke retaining holes 16 is located in the centre of each basic base, and the nearest spoke retaining hole 16 as viewed in the circumferential direction is then located between two adjacent basic bases or base projections 21. Viewed in the radial direction, each base projection 21 is also provided with a further recess 26, wherein this recess 26 extends essentially in the axial direction and has a larger width near the flange face 23 than near the end face 22. It is also clearly evident from figure 3 that respectively a screw hole 17 is arranged on a common radial line together with a spoke retaining hole 16, wherein this radial line intersects one of the breakthroughs 24 in the centre or bisects it at the same time. The bolt circle 19, on which the screw holes 17 lie, preferably has a diameter that is larger than 100 mm and can be 120 mm, for example. The brake disc 3, in turn, has an even larger diameter and the actual brake ring 6, which can be provided with slots as usual for better cooling, is fastened to the end faces 22 of the base projections by means of the fastening screws 18 via V-shaped connecting webs 7, which are provided at their common base with retaining holes 8 for the passage of the fastening screws 18. Numerous modifications will become apparent to the person skilled in the art from the foregoing description. The scope of the invention is defined by the appended claims. The exemplary embodiment shown in the drawings constitutes only a preferred exemplary embodiment and is not intended to limit the scope of protection herein. In particular, the shape of the flange face of the spoke flange, the arrangement of breakthroughs and the design of the base projections can vary. The hub according to the invention and a wheel formed therewith can be used both as a front wheel and as a rear wheel, and then optionally additionally be provided with a cassette holder or the like for interaction with the drive means of the bicycle. The wheel according to the invention can be used in particular with any existing bicycle frame and the brake callipers already attached there.

## Claims

1. A hub for wheels of bicycles with disc brakes, having a hub shell (11) with a first spoke flange (13), with a second spoke flange (14) and with a through hole (12) in the hub shell for a wheel bearing axle, wherein the first spoke flange and the second spoke flange are respectively provided with a plurality of spoke retaining holes (15; 16) arranged on a pitch circle around a wheel axle and wherein the second spoke flange is provided with a fastening device for a brake disc comprising screw holes, **wherein** the second spoke flange (14) has a larger diameter than the first spoke flange (13) and the spoke retaining holes (16) on the second spoke flange are arranged on an outer pitch circle (20) with a larger radius around the wheel axis than the spoke retaining holes (15) on the first spoke flange, and wherein the screw holes (17) on the second spoke flange (14) are arranged offset relative to the spoke retaining holes (16) on the second spoke flange (14) on a bolt circle (19), **characterized in that** the second spoke flange (14) has a base projection (21) for each screw hole (17), wherein the screw holes (17) are respectively arranged in end sections (22) of the base projections (21) and are axially and radially offset from the spoke retaining holes (16)..

2. The hub according to claim 1, **characterized in that** the screw holes (17) are arranged on a bolt circle (19) whose diameter is at least 75 mm

3. The hub according to claim 2, **characterized in that** the bolt circle has a diameter which is larger than 90 mm, more preferably larger than 110 mm and particularly preferably 120 mm.

4. The hub according to any of claims 1 to 3, **characterized in that** the second spoke flange (14) has eight screw holes (16)

5. The hub according to any of claims 1 to 4, **characterized in that** the second spoke flange has twice as many spoke retaining holes (16) as screw holes (17).

6. The hub according to any of claims 1 to 5, **characterized in that** each base projection (21) has a base with an axially extending recess (26) and is respectively positioned in the region of one of the recesses of one of the spoke retaining holes (16).

7. The hub according to any of claims 1 to 6, **characterized in that** the second spoke flange is provided with pocket depressions or breakthroughs (24) in a flange face (23) between the through hole (11) and the spoke retaining holes (16), wherein the pocket depressions or the breakthroughs (24) are preferably arranged rotationally symmetric to the wheel axle.

8. The hub according to claim 6 and 7, **characterized in that** a recess (26) and a breakthrough (24) are respectively arranged symmetrically to a radial line, wherein a screw hole (17) and a spoke retaining hole (16) are arranged symmetrically to this radial line, and are preferably arranged on the radial line with their hole centre.

9. The hub according to one of claims 1 to 8, **characterized in that** the base projection (21) is an integral part of the second spoke flange (14), wherein the second spoke flange and/or the hub sleeve consist of a cast part or a forged part.

10. A wheel for bicycles with disc brakes, the wheel having a hub (10) having a hub shell (11) with a first spoke flange (13), with a second spoke flange (14) and with a through hole (12) in the hub shell for a wheel bearing axle, with a rim ring (1) which is non-rotatably connected to the hub (10) by means of spokes (2), and with a brake disc (3), wherein the first spoke flange and the second spoke flange are respectively provided with a plurality of spoke retaining holes arranged on a pitch circle around a wheel axle, to which holes the spokes are anchored with spoke heads, and wherein the second spoke flange is provided with a fastening device for a brake disc comprising screw holes, **characterized in that** the hub is according to any of claims 1 to 9.

11. The wheel according to claim 10, **characterized in that** the bolt circle (19) on which the screw holes (17) are arranged, has a diameter of at least 75 mm.

12. The wheel according to claim 11, **characterized in that** a brake disc is screwed to the second spoke flange, wherein the brake disc has eight fastening points for threaded screws to pass through, wherein the fastening points are arranged on a bolt circle with a diameter which, matching to the bolt circle of the screw holes is larger than 75 mm, in particular larger than 90 mm, more preferably larger than 110 mm, and in particular preferably 120 mm, and respectively one fastening point is fastened to one of the screw holes on the second spoke flange by means of a threaded screw.

13. The wheel according to claim 12, **characterized in that** a sensor ring is assigned to the brake disc as an additional separate element, wherein the sensor ring has retaining webs with retaining holes that protrude radially inwards and each retaining hole of the sensor ring is fastened to a fastening point by means of one of the threaded screws for the brake disc.

14. Brake disc for fixing to a wheel **characterized in that** the wheel is according to one of claims 10 to 13, wherein the brake disc has eight fastening points for threaded screws to pass through, wherein the fastening points are arranged on a bolt circle with a diameter which, matching to the bolt circle of the screw holes is larger than 75 mm, in particular larger than 90 mm, more preferably larger than 110 mm, and in particular preferably 120 mm, and respectively one fastening point is fastened to one of the screw holes on the second spoke flange by means of a threaded screw.

## Patentansprüche

1. Nabe für Laufräder von Fahrrädern mit Scheibenbremsen, aufweisend einen Nabenhülse (11) mit einem ersten Speichenflansch (13), mit einem zweiten Speichenflansch (14) und mit einem Durchgangsloch (12) in der Nabenhülse für eine Radlagerachse, wobei der erste Speichenflansch und der zweite Speichenflansch jeweils mit einer Vielzahl von auf einem Teilkreis um eine Radachse angeordneten Speichenhaltelöchern (15; 16) versehen ist und wobei der zweite Speichenflansch mit einer Einschraublöcher umfassenden Befestigungseinrichtung für eine Bremsscheibe versehen ist, **wobei** der zweite Speichenflansch (14) einen größeren Durchmesser hat als der erste Speichenflansch (13) und die Speichenhaltelöcher (16) am zweiten Speichenflansch auf einem äußeren Teilkreis (20) mit größerem Radius um die Radachse angeordnet sind als die Speichenhaltelöcher (15) am ersten Speichenflansch, und wobei die Einschraublöcher (17) am zweiten Speichenflansch (14) gegenüber den Speichenhaltelöchern (16) am zweiten Speichenflansch (14) versetzt auf einem Lochkreis (19) angeordnet sind, **dadurch gekennzeichnet, dass** der zweite Speichenflansch (14) für jedes Einschraubloch (17) einen Sockelvorsprung (21) aufweist, wobei die Einschraublöcher jeweils in Stirnabschnitten (22) der Sockelvorsprünge (21) angeordnet sind und axial und radial versetzt zu den Speichenhaltelöchern (16) liegen.

2. Nabe nach Anspruch 1, **dadurch gekennzeichnet, dass** die Einschraublöcher (17) auf einem Lochkreis (19) angeordnet sind, dessen Durchmesser wenigstens 75 mm beträgt.

3. Nabe nach Anspruch 2, **dadurch gekennzeichnet, dass** der Lochkreis einen Durchmesser aufweist, der größer ist als 90 mm, weiter vorzugsweise größer ist als 110 mm, und insbesondere vorzugsweise 120 mm beträgt.

4. Nabe nach einem der Ansprüche 1 bis 3, **dadurch gekennzeichnet, dass** der zweite Speichenflansch (14) acht Einschraublöcher (16) aufweist

5. Nabe nach einem der Ansprüche 1 bis 4, **dadurch gekennzeichnet, dass,** der zweite Speichenflansch doppelt so viele Speichenhaltelöcher (16) wie Einschraublöcher (17) aufweist.

6. Nabe nach einem der Ansprüche 1 bis 5, **dadurch gekennzeichnet, dass** jeder Sockelvorsprung (21) einen Sockel mit einer axial sich erstreckenden Aussparung (26) aufweist und jeweils im Bereich einer der Aussparungen eines der Speichenhaltelöcher (16) positioniert ist.

7. Nabe nach einem der Ansprüche 1 bis 6, **dadurch gekennzeichnet, dass** der zweite Speichenflansch in einer Flanschfläche (23) zwischen dem Durchgangsloch (11) und den Speichenhaltelöchern (16) mit Taschenvertiefungen oder Durchbrüchen (24) versehen ist, wobei die Taschenvertiefungen oder Durchbrüche (24) vorzugsweise rotationssymmetrisch zur Radachse angeordnet sind.

8. Nabe nach Anspruch 6 und 7, **dadurch gekennzeichnet, dass** jeweils eine Aussparung (26) und ein Durchbruch (24) symmetrisch zu einer Radiallinie angeordnet liegen, wobei ein Einschraubloch (17) und ein Speichenhalteloch (16) symmetrisch zu dieser Radiallinie angeordnet sind, und vorzugsweise mit ihrer Lochmitte auf der Radiallinie angeordnet sind.

9. Nabe nach einem der Ansprüche 1 bis 8, **dadurch gekennzeichnet, dass** der Sockelvorsprung (21) integraler Bestandteil des zweiten Speichenflanschs (14) ist, wobei der zweite Speichenflansch und/oder die Nabenhülse aus einem Gussteil oder Schmiedeteil bestehen.

10. Laufrad für Fahrräder mit Scheibenbremsen, wobei das Laufrad mit einer Nabe (10), die eine Nabenhülse (11) mit einem ersten Speichenflansch (13), mit einem zweiten Speichenflansch (14) und mit einem Durchgangsloch (12) in der Nabenhülse für eine Radlagerachse aufweist, mit einem Felgenring (1), der mittels Speichen (2) drehfest mit der Nabe (10) verbunden ist, und mit einer Bremsscheibe (3) versehen ist, wobei der erste Speichenflansch und der zweite Speichenflansch jeweils mit einer Vielzahl von auf einem Teilkreis um eine Radachse angeordneten Speichenhaltelöchern versehen ist, an denen die Speichen mit Speichenköpfen verankert sind, und wobei der zweite Speichenflansch mit einer Einschraublöcher umfassenden Befestigungseinrichtung für eine Bremsscheibe versehen ist, **dadurch gekennzeichnet, dass** die Nabe gemäß einem der Ansprüche 1 bis 9 ausgebildet ist.

11. Laufrad nach Anspruch 10, **dadurch gekennzeichnet, dass** der Lochkreis (19), auf dem die Einschraublöcher (17) angeordnet sind, einen Durchmesser von wenigstens 75 mm hat.

12. Laufrad nach Ansprüche 11, **dadurch gekennzeichnet, dass** eine Bremsscheibe am zweiten Speichenflansch angeschraubt ist, wobei die Bremsscheibe acht Befestigungsstellen für einen Durchgriff von Gewindeschrauben aufweist, wobei die Befestigungsstellen auf einem Lochkreis mit einem Durchmesser angeordnet sind, der passend zu dem Lochkreis der Einschraublöcher größer ist als 75 mm, insbesondere größer ist als 90 mm, weiter vorzugsweise größer ist als 110 mm, und insbesondere vorzugsweise 120 mm beträgt, und jeweils eine Befestigungsstelle mittels einer Gewindeschraube an einem der Einschraublöcher am zweiten Speichenflansch befestigt ist.

13. Laufrad nach Anspruch 12, **dadurch gekennzeichnet, dass** der Bremsscheibe ein Sensorring als zusätzliches separates Element zugeordnet ist, wobei der Sensorring nach radial innen vorkragende Haltestege mit Haltelöchern aufweist und jedes Halteloch des Sensorrings an einer Befestigungsstelle mittels einer der Gewindeschrauben für die Bremsscheibe befestigt ist.

14. Bremsscheibe zur Befestigung an einem Laufrad, **dadurch gekennzeichnet, dass** das Laufrad gemäß einem der Ansprüche 10 bis 13 ausgebildet ist, wobei die Bremsscheibe acht Befestigungsstellen für einen Durchgriff von Gewindeschrauben aufweist, wobei die Befestigungsstellen auf einem Lochkreis mit einem Durchmesser angeordnet sind, der passend zu dem Lochkreis der Einschraublöcher größer ist als 75 mm, insbesondere größer ist als 90 mm, weiter vorzugsweise größer ist als 110 mm, und insbesondere vorzugsweise 120 mm beträgt, und jeweils eine Befestigungsstelle mittels einer Gewindeschraube an einem der Einschraublöcher am zweiten Speichenflansch befestigt ist.

## Revendications

1. Moyeu pour roues de bicyclettes équipées de freins à disque, comprenant un corps de moyeu (11) avec un premier flasque (13), un second flasque (14) et un trou traversant (12) dans le corps de moyeu pour un axe de moyeu, le premier flasque et le second flasque étant respectivement pourvus d'une pluralité de trous de retenue de rayons (15 ; 16) disposés sur un cercle primitif autour d'un axe de roue et le second flasque étant pourvu d'un dispositif de fixation pour un disque de frein comprenant des trous de vis, le second flasque (14) ayant un diamètre plus grand par comparaison avec le premier flasque (13) et les trous de retenue de rayons (16) sur le second flasque étant disposés sur un cercle primitif extérieur (20) ayant un rayon plus grand autour de l'axe de roue par comparaison avec les trous de retenue de rayons (15) sur le premier flasque, et les trous de vis (17) sur le second flasque (14) étant disposés de manière décalée par rapport aux trous de retenue de rayons (16) sur le second flasque (14) sur un cercle de perçage (19), **caractérisé en ce que** le second flasque (14) présente une saillie de base (21) pour chaque trou de vis (17), les trous de vis (17) étant respectivement disposés dans des sections terminales (22) des saillies de base (21) et étant décalés axialement et radialement des trous de retenue de rayons (16)..

2. Moyeu selon la revendication 1, **caractérisé en ce que** les trous de vis (17) sont disposés sur un cercle de perçage (19) dont le diamètre est d'au moins 75 mm.

3. Moyeu selon la revendication 2, **caractérisé en ce que** le cercle de perçage présente un diamètre qui est supérieur à 90 mm, de préférence supérieur à 110 mm et de manière particulièrement préférée égal à 120 mm.

4. Moyeu selon l'une quelconque des revendications 1 à 3, **caractérisé en ce que** le second flasque (14) présente huit trous de vis (16).

5. Moyeu selon l'une quelconque des revendications 1 à 4, **caractérisé en ce que** le second flasque présente deux fois plus de trous de retenue de rayons (16) que de trous de vis (17).

6. Moyeu selon l'une quelconque des revendications 1 à 5, **caractérisé en ce que** chaque saillie de base (21) comporte une base avec un renfoncement (26) s'étendant axialement et est positionnée respectivement dans la région de l'un des renfoncements de l'un des trous de retenue de rayons (16).

7. Moyeu selon l'une quelconque des revendications 1 à 6, **caractérisé en ce que** le second flasque est pourvu de creux ou de passages (24) dans une face de flasque (23) entre le trou traversant (11) et les trous de retenue de rayons (16), les creux ou passages (24) étant disposés de préférence en symétrie de révolution par rapport à l'axe de roue.

8. Moyeu selon les revendications 6 et 7, **caractérisé en ce qu'**un renfoncement (26) et un passage (24) sont respectivement disposés symétriquement par rapport à une ligne radiale, un trou de vis (17) et un trou de retenue de rayon (16) étant disposés symétriquement par rapport à cette ligne radiale et étant disposés de préférence sur la ligne radiale avec leur centre de trou.

9. Moyeu selon l'une des revendications 1 à 8, **caractérisé en ce que** la saillie de base (21) fait partie intégrante du second flasque (14), le second flasque et/ou l'enveloppe de moyeu étant constitués d'une pièce moulée ou d'une pièce forgée.

10. Roue pour bicyclettes avec freins à disque, la roue ayant un moyeu (10) comportant un corps de moyeu (11) avec un premier flasque (13), un second flasque (14) et un trou traversant (12) dans le corps de moyeu pour un axe de moyeu, avec un cercle de jante (1) qui est relié de manière non rotative au moyeu (10) au moyen de rayons (2), et avec un disque de frein (3), le premier flasque et le second flasque étant respectivement pourvus d'une pluralité de trous de retenue de rayons disposés sur un cercle primitif autour d'un axe de roue, trous auxquels les rayons sont fixés avec des têtes de rayon, et le second flasque étant pourvu d'un dispositif de fixation pour un disque de frein comprenant des trous de vis, **caractérisée en ce que** le moyeu est conforme à l'une quelconque des revendications 1 à 9.

11. Roue selon la revendication 10, **caractérisée en ce que** le cercle de perçage (19) sur lequel sont disposés les trous de vis (17) présente un diamètre d'au moins 75 mm.

12. Roue selon la revendication 11, **caractérisée en ce qu'**un disque de frein est vissé sur le second flasque, le disque de frein présentant huit points de fixation pour le passage de vis filetées, les points de fixation étant disposés sur un cercle de perçage dont le diamètre, correspondant au cercle de perçage des trous de vis, est supérieur à 75 mm, en particulier supérieur à 90 mm, de préférence supérieur à 110 mm et en particulier de préférence égal à 120 mm, et un point de fixation étant respectivement fixé à l'un des trous de vis du second flasque au moyen d'une vis filetée.

13. Roue selon la revendication 12, **caractérisée en ce qu'**un anneau de capteur est associé au disque de frein sous la forme d'un élément séparé supplémentaire, l'anneau de capteur présentant des nervures de retenue avec des trous de retenue qui font saillie radialement vers l'intérieur et chaque trou de retenue de l'anneau de capteur étant fixé à un point de fixation au moyen d'une des vis filetées pour le disque de frein.

14. Disque de frein destiné à être fixé sur une roue, **caractérisé en ce que** la roue est conforme à l'une des revendications 10 à 13, le disque de frein présentant huit points de fixation pour le passage de vis filetées, les points de fixation étant disposés sur un cercle de perçage dont le diamètre, correspondant au cercle de perçage des trous de vis, est supérieur à 75 mm, en particulier supérieur à 90 mm, de préférence supérieur à 110 mm et en particulier de préférence égal à 120 mm, et un point de fixation étant respectivement fixé à l'un des trous de vis du second flasque au moyen d'une vis filetée.
